# EUROPÄISCHE PATENTSCHRIFT

(11) **EP 3 530 160 B1**
(45) Veröffentlichungstag und Bekanntmachung des Hinweises auf die Patenterteilung: **05.08.2020**
(21) Anmeldenummer: 18157754.5
(22) Anmeldetag: 21.02.2018
(51) Int. Cl.: A47J 43/07

(54) **SPEISENZUBEREITUNGSVORRICHTUNG MIT VERRIEGELUNG**
FOOD PREPARATION DEVICE WITH LOCK
DISPOSITIF DE PRÉPARATION D'ALIMENTS COMPRENANT UN VERROUILLAGE

(43) Veröffentlichungstag der Anmeldung: 28.08.2019
(73) Patentinhaber: Vorwerk & Co. Interholding GmbH, 42270 Wuppertal (DE)
(72) Erfinder: Charopoulos, Philipp, 40223 Düsseldorf (DE); van Teeffelen, Niklas, 42549 Velbert (DE); Thies, Felix, 42115 Wuppertal (DE)
(74) Vertreter: Gille Hrabal

(56) Entgegenhaltungen:
- EP-A1- 2 865 304
- WO-A1-2013/049881
- US-A1- 2002 176 320

## Beschreibung

Die Erfindung betrifft eine Speisenzubereitungsvorrichtung mit einem drehbaren Werkzeug zum Zerkleinern und/oder Mischen einer Speise in einem Speisenzubereitungsgefäß. Das Werkzeug zum Drehen kann lösbar mit einer Welle verbunden werden. Die Welle liegt zumindest teilweise außerhalb des Speisenzubereitungsgefäßes. Ein Verriegelungsmechanismus für ein verriegeltes Verbinden des Werkzeugs mit der Welle ist vorgesehen. Die Erfindung betrifft ferner Anordnungen.

Wenn bei der Zubereitung einer Speise Komponenten wie z.B. ein Mixmesser in unmittelbaren Kontakt mit der Speise kommen, ist üblicherweise sicherzustellen, dass diese Komponenten ordnungsgemäß gereinigt werden können. Häufig ist dazu ein Ausbau oder eine Demontage einzelner Komponenten erforderlich, weil sonst beispielsweise verschmutze Fugen nicht hinreichend gereinigt werden können. Der Ausbau oder die Demontage einzelner Komponenten stellen einen Zusatzaufwand für den Benutzer für das Reinigen dar und ist häufig Ursache für Fehibenutzungen beispielsweise durch einen nicht planmäßigen Wiedereinbau oder Montage der zuvor ausgebauten oder demontierten Komponente.

Die Druckschriften EP2865304A1, WO2013/049881A1 und US2002/176320A1 offenbaren Küchenmaschinen mit einem Verriegelungsmechanismus für ein verriegeltes Verbinden eines Werkzeugs mit einer Welle.

Die vorgenannten, aus dem Stand der Technik bekannten Merkmale können einzeln oder in beliebiger Kombination mit einem der nachfolgend beschriebenen erfindungsgemäßen Gegenstände und Ausführungsformen kombiniert werden.

Es ist Aufgabe der Erfindung, vor diesem Hintergrund einen entsprechend weiterentwickelten Verriegelungsmechanismus bereitzustellen.

Zur Lösung der Aufgabe dienen eine Speisenzubereitungsvorrichtung gemäß dem Hauptanspruch sowie Anordnungen gemäß den Nebenansprüchen. Vorteilhafte Ausführungsformen ergeben sich aus den Unteransprüchen.

Zur Lösung der Aufgabe dient eine Speisenzubereitungsvorrichtung mit einem drehbaren Werkzeug zum Zerkleinern und/oder Mischen einer Speise in einem Speisenzubereitungsgefäß, wobei das Werkzeug zum Drehen lösbar mit einer Welle verbunden werden kann, die zumindest teilweise außerhalb des Speisenzubereitungsgefäßes liegt oder liegen kann. Ein Verriegelungsmechanismus für ein verriegeltes Verbinden des Werkzeugs mit der Welle ist vorgesehen, wobei das Verriegeln selbstständig erfolgen kann.

Der Aufwand für ein Verbinden des Werkzeugs mit der Welle nach einem Reinigungsvorgang sowie das Risiko eines fehlerhaften Zusammenbaus können so reduziert werden. Die Anzahl von für den Zusammenbau erforderlichen Handgriffen kann reduziert und der Zusammenbau besonders einfach gestaltet werden. Eine erhöhte Sicherheit durch Fehlervermeidung wird ermöglicht. Eine Speisenzubereitungsvorrichtung mit besonders hohem Komfort für den Benutzer kann so bereitgestellt werden.

Die Speisenzubereitungsvorrichtung ist bevorzugt ein Speisenzubereitungsgerät wie z.B. eine elektrische Küchenmaschine vorzugsweise mit einem Heizelement zum Erhitzen der Speise in dem Speisenzubereitungsgefäß. Die Speisenzubereitungsvorrichtung kann grundsätzlich auch ein Ofen oder ein Kochautomat sein. Im Betrieb werden eine Speise und/oder eine Zutat in das Speisenzubereitungsgefäß gegeben und die Speise in dem Speisenzubereitungsgefäß zubereitet. Zubereiten einer Speise bedeutet ein Verarbeiten durch Mischen, Zerkleinern und/oder Erhitzen. Eine Speise kann fest oder flüssig sein. Auch eine Zutat kann für sich genommen eine Speise sein wie z.B. Milch oder Trinkwasser. Im einfachsten Fall ist eine Werkzeuganordnung und/oder ein Speisenzubereitungsgefäß eine Speisenzubereitungsvorrichtung.

Das Werkzeug hat eine Drehachse. Das Werkzeug ist im betriebsbereiten Zustand drehfest mit der Welle verbunden. Das Werkzeug ist insbesondere ein Mischwerkzeug. Vorzugsweise umfasst das Werkzeug wenigstens eine radial abstehende Klinge zum Zerkleinern und Mischen. Bevorzugt wird das Werkzeug aus einem Messerpaket insbesondere mit vier 90° versetzten Klinken gebildet. Zum Zerkleinern und/oder Mischen einer Speise in einem Speisenzubereitungsgefäß befindet sich das Werkzeug innerhalb des Speisenzubereitungsgefäßes und kann sich dort um die Drehachse drehen. Wenn ein Werkzeug zum Drehen lösbar mit einer Welle verbunden werden kann, bedeutet dies, dass das Werkzeug durch die Welle für ein Drehen zum Zerkleinern und/oder Mischen einer Speise angetrieben werden kann.

Eine Welle ist ein zylindrischer Drehkörper. Eine Welle hat eine Drehachse. Vorzugsweise haben die Welle und das Werkzeug dieselbe Drehachse. Eine Welle kann einen oder mehrere Wellenabsätze zum Beispiel für einen Kugellagersitz oder als Abschirmung aufweisen. Eine Welle, die zumindest teilweise außerhalb des Speisenzubereitungsgefäßes liegt, erstreckt sich bevorzugt durch eine Gefäßdurchführung von außen ins Innere des Speisenzubereitungsgefäßes. Bevorzugt ist ein Dichtelement an der Gefäßdurchführung vorgesehen, damit keine Flüssigkeit aus dem Inneren des Speisenzubereitungsgefäßes durch die Gefäßdurchführung nach außen gelangt. Die Gefäßdurchführung erstreckt sich insbesondere durch den Gefäßboden, vorzugsweise in der Mitte des Gefäßbodens. Die Welle kann über eine an die Welle lösbar angekoppelte Ankopplungswelle mit dem Werkzeug verbunden sein. Außerhalb des Speisenzubereitungsgefäßes kann die Welle durch einen Elektromotor der Speisenzubereitungsvorrichtung angetrieben werden.

Der Verriegelungsmechanismus kann beispielsweise wie folgt bajonettartig ausgestaltet sein, wobei eine Anordnung mit dem in diesem Absatz beispielhaft beschriebenen Verriegelungsmechanismus einen eigenständigen Aspekt der Erfindung darstellt. Diese Anordnung besteht im Wesentlichen aus einem Oberteil und einem Unterteil. Ein bajonettartiger Verriegelungsmechanismus zum Verriegeln des Oberteils mit dem Unterteil ist vorgesehen und so beschaffen, dass nur in einer Decklage eines Sperrelements des Unterteils das Oberteil drehfest auf das Unterteil aufgesteckt werden kann. Das Sperrelement wird dann von dem Oberteil umschlossen und kann von der Decklage in eine Sperrlage bewegt werden. In der Sperrlage gelangt ein Sperrelement-Vorsprung des Sperrelements in eine hinterschnittene Aussparung des Oberteils, so dass das Oberteil mit dem Unterteil verriegelt wird. Das Bewegen des Sperrelements von der Decklage in die Sperrlage kann selbstständig erfolgen. Die nachfolgenden Ausführungsformen beziehen sich nicht nur auf die Speisenzubereitungsvorrichtung, sondern können sich auch auf diese Anordnung mit dem bajonettartigen Verriegelungsmechanismus beziehen.

Erfindungsgemäß ist ein Magnet vorgesehen und der Verriegelungsmechanismus ist so eingerichtet ist, dass das selbstständige Verriegeln durch eine Magnetkraft des Magneten erfolgt. Ein Magnet vermag ein Magnetfeld zu erzeugen. Ein Magnet kann bestimmte andere Körper, z.B. mit einem Eisenanteil, magnetisch anziehen oder abstoßen. Das Anziehen oder Abstoßen erfolgt durch die Magnetkraft. Ein selbstständiges Verriegeln kann so konstruktiv besonders einfach und mit besonders wenigen Bauteilen umgesetzt werden. Eine durch Magnetkraft angetriebene verriegelnde Bewegung erfolgt selbstständig, d.h., während der verriegelnden Bewegung haben z.B. ein Benutzer oder ein Motor wie etwa ein Elektromotor keinen Anteil an der Antriebskraft der verriegelnden Bewegung.

Insbesondere sind ein Magnet und ein dazu beweglicher anderer Magnet vorgesehen. Eine zwischen den Magneten wirkende Magnetkraft kann dann eine Relativbewegung beider Magneten zueinander und so das selbstständige Verriegeln bewirken. Alternativ oder ergänzend sind ein Magnet und ein dazu beweglicher magnetisch anziehbarer Körper, z.B. ein Vorsprung aus Eisen oder mit einem Eisenanteil, vorgesehen. Eine zwischen dem Magneten und dem Vorsprung wirkende Magnetkraft kann dann eine Relativbewegung und so das selbstständige Verriegeln bewirken. Vorzugsweise ist der Magnet ein Dauermagnet. Insbesondere ist der andere Magnet ein Ferromagnet. Sind mehrere Magneten vorgesehen, ist in einer Ausgestaltung zumindest ein Magnet der mehreren Magnete ein Ferromagnet, z.B. in Form des magnetisch anziehbareren Körpers.

In einer Ausgestaltung ist der Verriegelungsmechanismus so eingerichtet, dass das selbstständige Verriegeln durch eine Feder erfolgt. Wenn beispielsweise das selbstständige Verriegeln durch eine Rotation eines Sperrelements in eine Sperrlage erfolgt, kann diese Rotation durch die Feder angetrieben werden. Beispielsweise können dabei das Sperrelement und ein Zapfenelement eine gleiche Außenkontur aufweisen, wobei das Sperrelement drehbar auf dem Zapfenelement angeordnet ist. Das Zapfenelement und/oder das Sperrelement sind mit der Welle verbunden. Ein Rückhalteelement kann vorgesehen sein, um das Sperrelement entgegen der Federkraft der Feder in einer Decklage zu halten, in der sich beide Außenkonturen des Sperrelements und des Zapfenelements axial decken. Wenn ein das Werkzeug aufweisendes Oberteil mit einer Innenkontur formschlüssig drehfest auf das Sperrelement und das Zapfenelement gesteckt wird, kann so das Rückhalteelement gelöst werden. Das Sperrelement kann durch die freiwerdende Federkraft in eine hinterschnittene Aussparung des Oberteils rotiert werden, so dass ein selbstständiges Verriegeln des Werkzeugs mit der Welle erfolgt. In einer Ausführungsform sind die Speisenzubereitungsvorrichtung und/oder die Anordnung so eingerichtet, dass das selbstständige Verriegeln nicht durch Federkraft erfolgt.

In einer Ausführungsform sind ein Oberteil, an dem das Werkzeug angebracht ist oder werden kann, und ein Unterteil, das die Welle umfasst, vorgesehen. Der Verriegelungsmechanismus ist so eingerichtet, dass das selbstständige Verriegeln für das verriegelte Verbinden des Werkzeugs mit der Welle zwischen dem Oberteil und dem Unterteil erfolgt. Ein besonders komfortables und einfaches Zusammensetzen von Werkzeug und Welle kann so ohne ein manuelles gegeneinander Verdrehen ermöglicht werden. Der Benutzer braucht lediglich das Oberteil axial auf das Unterteil zu stecken.

Ferner kann so erreicht werden, dass das Unterteil mit der Welle in dem Speisenzubereitungsgefäß verbleiben kann und lediglich das Oberteil mit dem Werkzeug daraus gelöst wird. Teigreste können so besonders einfach vom Gefäßboden entnommen werden und das Oberteil mit dem Werkzeug für den nächsten Zubereitungsschritt wieder eingebaut werden.

In einer Ausführungsform ist eine Ankopplungswelle vorgesehen, an der das Werkzeug angebracht ist. Der Verriegelungsmechanismus ist so eingerichtet, dass die Ankopplungswelle axial an die Welle angekoppelt wird, also drehfest angekoppelt wird, wenn das Werkzeug mit der Welle verriegelt verbunden wird. Ein verriegeltes Verbinden des Werkzeugs mit der Welle kann so durch Aufstecken des Oberteils auf das Unterteil innerhalb des Speisenzubereitungsgefäßes besonders komfortabel realisiert werden. Vorzugsweise umfasst das Oberteil die Ankopplungswelle. Insbesondere ist die Ankopplungswelle drehbar in dem Oberteil gelagert. Vorzugsweise umfasst das Unterteil die Welle. Insbesondere ist die Welle in dem Unterteil gelagert. Bevorzugt ist das Unterteil mit einem Speisenzubereitungsgefäß mechanisch fest sowie durch den Benutzer lösbar verbunden.

In einer Ausgestaltung umfasst das Oberteil ein Oberteilgehäuse. Vorzugsweise ist eine Ankopplungswelle in dem Oberteilgehäuse gelagert, insbesondere mit einem Kugellager, das nachfolgend oberes Kugellager genannt wird. Vorzugsweise ist die Ankopplungswelle axial zum Oberteilgehäuse fixiert. Bevorzugt ist das Werkzeug fest an einem Ende der Ankopplungswelle angebracht, also nicht für ein Lösen durch den Benutzer vorgesehen oder für ein zerstörungsfreies Lösen eingerichtet.

In einer Ausgestaltung umfasst das Unterteil ein Unterteilgehäuse. Vorzugsweise ist die Welle in dem Unterteilgehäuse gelagert, insbesondere mit einem Kugellager, das nachfolgend unteres Kugellager genannt wird. In einer Ausgestaltung erfolgt eine axiale Verriegelung zwischen dem Oberteilgehäuse des Oberteils und einem Sperrelement des Unterteils. In einer Ausgestaltung weist das Unterteil ein Zapfenelement zum drehfesten Verbinden mit dem Oberteilgehäuse des Oberteils auf. Insbesondere sind das Sperrelement und/oder das Zapfenelement drehbar zur Welle angeordnet. Vorzugsweise sind das Sperrelement und/oder das Zapfenelement axial fixiert zum Unterteilgehäuse angeordnet. Bevorzugt ist das Sperrelement drehbar zum Unterteilgehäuse angeordnet.

In einer Ausführungsform umfasst das Unterteil mindestens einen Magneten und/oder das Oberteil mindestens einen Magneten. Ein selbstständiges Verriegeln durch eine relative Verriegelungsbewegung zwischen dem Unterteil und dem Oberteil, die durch eine Magnetkraft zwischen dem Unterteil und dem Oberteil angetrieben wird, kann so erzielt werden. Ein besonders komfortables Verriegeln wird so ermöglicht.

Insbesondere ist der Magnet oder ein magnetisch anziehbarer Körper des Oberteils in dem Oberteilgehäuse des Oberteils eingelassen, bevorzugt an einer Innenkontur. Vorzugsweise ist der Magnet oder ein magnetisch anziehbarer Körper des Unterteils im Sperrelement des Unterteils angeordnet. Bevorzugt steht der Magnet oder ein magnetisch anziehbarer Körper des Unterteils an einer Sperrelement-Außenkontur hervor, bildet einen Sperrelement-Vorsprung oder ist in einem Sperrelement-Vorsprung integriert oder eingelassen. Die Sperrelement-Außenkontur erstreckt sich umfänglichen, d.h. um die Rotationsachse herum. Die Sperrelement-Außenkontur entspricht also einer radialen Mantelfläche.

In einer Ausführungsform ist der Verriegelungsmechanismus so eingerichtet, dass das selbstständige Verriegeln durch eine selbstständige Rotationsbewegung in eine Sperrlage erfolgt. In der Sperrlage befindet sich das Werkzeug im verriegelt verbundenen Zustand mit der Welle. Die oben erwähnte relative Verriegelungsbewegung zwischen dem Oberteil und dem Unterteil oder einem Oberteilgehäuse und dem Sperrelement für das verriegelte Verbinden des Werkzeugs mit der Welle ist gemäß dieser Ausführungsform also eine selbstständige Rotationsbewegung. Eine besonders kompakte Bauweise kann so realisiert werden. Die selbstständige Rotationsbewegung erfolgt um eine Rotationsachse, die bevorzugt der Drehachse entspricht.

In einer Ausführungsform ist ein Sperrelement vorgesehen und der Verriegelungsmechanismus ist so eingerichtet, dass das Sperrelement in eine hinterschnittene Aussparung gelangt ist, wenn das Sperrelement durch die selbstständige Rotationsbewegung die Sperrlage erreicht, so dass das Werkzeug mit der Welle verriegelt verbunden ist. Eine hinterschnittene Aussparung erzeugt einen axialen Hinterschnitt. Insbesondere bildet die hinterschnittene Aussparung einen im Querschnitt U-förmigen oder ringsegmentartigen Hinterschnitt. Eine besonders zuverlässige und robuste Verriegelung kann so erzielt werden. Wenn das Sperrelement für das verriegelte Verbinden in eine hinterschnittene Aussparung rotiert, liegt das Sperrelement auf einer radialen Stützstruktur auf, so dass ein axiales Verschieben durch die radiale Stützstruktur verhindert wird. Bevorzugt ist die Stützstruktur ein insbesondere U-förmiger oder ringsegmentartiger Absatz, insbesondere in Umfangrichtung benachbart zu einem Zapfenelement-Vorsprung. Bevor sich das Sperrelement in der hinterschnittenen Aussparung befindet und nachdem das Sperrelement die hinterschnittene Aussparung verlassen hat, ist bevorzugt ein axiales Verschieben des Sperrelements relativ zum Unterteil bzw. Unterteilgehäuse wieder möglich.

In einer Ausführungsform umfasst das Unterteil das Sperrelement und/oder das Oberteil die hinterschnittene Aussparung. Das Unterteil kann so besonders robust und zuverlässig mit dem Oberteil verriegelt verbunden werden. Insbesondere weist das Oberteilgehäuse die hinterschnittene Aussparung auf. Die hinterschnittene Aussparung wird radial durch die Innenkontur des Oberteilgehäuses definiert. Bevorzugt wird die Innenkontur durch eine zylinderförmige Mantelfläche definiert. Die hinterschnittene Aussparung ist dann dort vorhanden, wo die Eingangskontur einen geringeren Radius als die Innenkontur hat und somit einen sich radial erstreckenden Absatz bzw. eine Stützstruktur bildet.

In einer Ausführungsform kann das Sperrelement relativ zu einem axial angrenzenden Zapfenelement rotieren. Der Verriegelungsmechanismus ist so eingerichtet, dass in einer Decklage des Sperrelements das Zapfenelement das Sperrelement axial überdeckt. Ein Drehen in beide Drehrichtungen eines besonders zuverlässig mit der Welle verriegelt verbundenen Werkzeugs wird so ermöglicht. Axial und radial beziehen sich auf die Rotationsachse der selbstständigen Rotationsbewegung. Axial überdecken meint, dass eine Zapfenelement-Außenkontur eine Sperrelement-Außenkontur in Decklage in axialer Richtung betrachtet vollständig überdeckt. Mit anderen Worten steht die Sperrelement-Außenkontur in Decklage an keiner Stelle radial an der Zapfenelement-Außenkontur hervor. Wie die Sperrelement-Außenkontur erstreckt sich auch die Zapfenelement-Außenkontur umfänglich, entspricht also einer radialen Mantelfläche. Insbesondere ist die Zapfenelement-Außenkontur auf einen axialen Bereich begrenzt, der im verriegelt verbundenen Zustand des Werkzeugs mit der Welle in Eingriff mit dem Oberteil steht, insbesondere dem Oberteilgehäuse. In einer Ausgestaltung sind die Zapfenelement-Außenkontur und die Sperrelement-Außenkontur in der Decklage im Querschnitt deckungsgleich und in der Sperrlage entsprechend versetzt.

In einer Ausführungsform umfasst das Unterteil das Zapfenelement und/oder das Sperrelement ist axial zwischen dem Zapfenelement und dem Oberteil angeordnet. Das Unterteil kann so besonders robust mit dem Oberteil verriegelt verbunden und das Zapfenelement gleichzeitig zur Verankerung mit einem Speisenzubereitungsgefäß genutzt werden, bevorzugt mittels einer formschlüssig drehfesten Verbindung. Das Zapfenelement kann dazu eine Sternform aufweisen. Darüber hinaus ist eine beidseitig axiale Fixierung mittels des Sperrelements mit einer besonders kompakten Bauweise möglich.

In einer Ausführungsform umfasst das Oberteil eine Ausnehmung zum Aufnehmen des Zapfenelements und des Sperrelements, wobei die Ausnehmung eine Eingangskontur zum drehfesten Aufnehmen des Zapfenelements und/oder eine Innenkontur zum Erlauben der selbstständigen Rotationsbewegung von der Decklage in die Sperrlage aufweist. Eine Eingangskontur zum drehfesten Aufnehmen des Zapfenelements ist an die Zapfenelement-Außenkontur zum Erzeugen einer formschlüssig drehfesten Verbindung angepasst. Formschlüssig drehfeste Verbindung meint, dass eine umfänglich nicht rotationssymmetrische Kontur relativ zu einer entsprechend geformten Gegenkontur axial geführt verschoben werden kann, jedoch gleichzeitig drehfest gekoppelt ist. Im aufgenommenen Zustand erstreckt sich mindestens ein radialer Zapfenelement-Vorsprung, der eine nicht rotationssymmetrische Zapfenelement-Außenkontur bildet, in eine radiale Aussparung der Ausnehmung, um die formschlüssig drehfeste Verbindung herzustellen. Die Eingangskontur bildet den Eingang zur Ausnehmung und erstreckt sich axial bevorzugt bis zur Innenkontur.

Im aufgesteckten Zustand des Oberteils auf das Unterteil sind das Sperrelement und das Deckelement in der Ausnehmung aufgenommen. Im verriegelt verbundenen Zustand befindet sich das Oberteil im aufgesteckten Zustand auf dem Unterteil. Die Innenkontur bezieht sich im aufgesteckten Zustand auf den axialen Bereich der Ausnehmung, über den sich das Sperrelement erstreckt. Die Eingangskontur bezieht sich im aufgesteckten Zustand auf den axialen Bereich der Ausnehmung, über den sich das Zapfenelement innerhalb der Ausnehmung erstreckt.

In einer Ausführungsform überdeckt das Zapfenelement in der Decklage des Sperrelements mit einem radialen Zapfenelement-Vorsprung axial einen radialen Sperrelement-Vorsprung des Sperrelements. Ein besonders leichtgängiges Aufstecken des Oberteils auf das Unterteil mit einer drehfesten Fixierung durch den Zapfenelement-Vorsprung bei gleichzeitiger Verriegelungsmöglichkeit durch den Sperrelement-Vorsprung können so erzielt werden. Der Zapfenelement-Vorsprung wird durch die Zapfenelement-Außenkontur und/oder der Sperrelement-Vorsprung durch die Sperrelement-Außenkontur gebildet. Der radiale Zapfenelement-Vorsprung dient der drehfesten Verbindung mit dem Oberteil, an dem das Werkzeug angebracht ist. Der radiale Sperrelement-Vorsprung dient dem axialen Verbinden mit dem Oberteil, insbesondere mittels der hinterschnittenen Aussparung des Oberteils.

In einer Ausführungsform ist die Eingangskontur der Ausnehmung des Oberteils für ein axiales Führen des Zapfenelement-Vorsprungs angepasst, derart, dass das Zapfenelement drehfest in dem Oberteil aufgenommen werden kann. Die Eingangskontur der Ausnehmung ist also formschlüssig drehfest mit dem Zapfenelement-Vorsprung verbunden, wenn das Zapfenelement in der Ausnehmung aufgenommen ist.

Wenn das Oberteil auf das Sperrelement und das Zapfenelement aufgesteckt wird, passiert bevorzugt zunächst das Sperrelement die Eingangskontur der Ausnehmung, das in der Decklage nicht über die Zapfenelement-Außenkontur radial übersteht. Mindestens ein Sperrelement-Vorsprung passiert dabei die Eingangskontur, der zur Eingangskontur für ein Erzeugen einer formschlüssig drehfesten Verbindung ausgebildet ist.

Wenn auch das Zapfenelement von der Ausnehmung aufgenommen ist und der Sperrelement-Vorsprung die Innenkontur der Ausnehmung erreicht, kann mindestens ein solcher Sperrelement-Vorsprung in die hinterschnittene Aussparung rotiert und so in die Sperrlage bewegt werden. Die hinterschnittene Aussparung ist insbesondere in Form einer radialen Aussparung vorgesehen, die sich über den axialen Bereich der Innenkontur erstreckt und an dem Bereich der Eingangskontur endet, also in dem Bereich der Eingangskontur nicht vorhanden ist. Eine radiale Stützstruktur kann so erzeugt werden, die ein axiales Abstützen des Sperrelements in der Sperrlage in Richtung des Zapfenelements erlaubt.

In einer Ausführungsform ist ein Rückstellelement zum Lösen der verriegelten Verbindung des Werkzeugs mit der Welle vorgesehen, also zum Entriegeln. Der Benutzer kann so das Oberteil besonders komfortabel vom Unterteil lösen. Insbesondere erfolgt das Betätigen des Rückstellelements zum Lösen der verriegelten Verbindung des Werkzeugs mit der Welle manuell oder mittels eines Stellmotors.

Vorzugsweise erfolgt das Betätigen des Rückstellelements zum Lösen der verriegelten Verbindung des Werkzeugs mit der Welle durch eine Rotationsbewegung, vorzugsweise in eine entgegengesetzte Rotationsrichtung zur selbstständigen Rotationsbewegung, insbesondere von der Decklage in die Sperrlage. Bevorzugt wird durch Betätigen des Rückstellelements das Sperrelement von der Sperrlage in die Decklage bewegt. Insbesondere ist das Rückstellelement von außerhalb des Speisenzubereitungsgefäßes und/oder von unterhalb des Gefäßbodens betätigbar.

Ein weiterer Aspekt der Erfindung betrifft eine Werkzeuganordnung oder ein Speisenzubereitungsgefäß mit der Werkzeuganordnung für eine Speisenzubereitungsvorrichtung insbesondere gemäß dem eingangs beschriebenen Aspekt der Erfindung. Die Werkzeuganordnung ist mit einem drehbaren Werkzeug zum Zerkleinern und/oder Mischen einer Speise in einem Speisenzubereitungsgefäß ausgestattet. Das Werkzeug kann zum Drehen lösbar mit einer Welle verbunden werden, die zumindest teilweise außerhalb des Speisenzubereitungsgefäßes liegen kann. Ein Verriegelungsmechanismus für ein verriegeltes Verbinden des Werkzeugs mit der Welle ist vorgesehen. Das Verriegeln kann selbstständig erfolgen. Insbesondere umfasst oder besteht die Werkzeuganordnung aus dem Oberteil und dem Unterteil. Die Merkmale, Ausführungsformen und Wirkungen der eingangs beschriebenen Anordnung oder Speisenzubereitungsvorrichtung zur Lösung der Aufgabe beziehen sich entsprechend auch auf diese Werkzeuganordnung und dieses Speisenzubereitungsgefäß.

Ein weiterer Aspekt der Erfindung betrifft eine Anordnung insbesondere für eine Werkzeuganordnung, ein Speisenzubereitungsgefäß oder eine Speisenzubereitungsvorrichtung nach einem der vorhergehenden Aspekte der Erfindung. Die Anordnung umfasst ein Oberteil und ein Unterteil. Ein bajonettartiger Verriegelungsmechanismus zum Verriegeln des Oberteils mit dem Unterteil ist vorgesehen. Der bajonettartige Verriegelungsmechanismus ist so beschaffen, dass nur in einer Decklage eines Sperrelements des Unterteils das Oberteil drehfest auf das Unterteil aufgesteckt werden kann. Das Sperrelement wird dann von dem Oberteil umschlossen und kann von der Decklage in eine Sperrlage bewegt werden. In der Sperrlage gelangt ein Sperrelement-Vorsprung des Sperrelements in eine hinterschnittene Aussparung des Oberteils, so dass das Oberteil mit dem Unterteil verriegelt verbunden wird. Das Bewegen des Sperrelements von der Decklage in die Sperrlage kann selbstständig erfolgen. Aufgesteckt bedeutet geführt aufgeschoben, um zu umschließen. Das Aufstecken des Oberteils auf das Unterteil erfolgt axial, also in Richtung der Rotationsachse. Die Merkmale, Ausführungsformen und Wirkungen der eingangs beschriebenen Anordnung oder Speisenzubereitungsvorrichtung zur Lösung der Aufgabe beziehen sich entsprechend auch auf diese Werkzeuganordnung und dieses Speisenzubereitungsgefäß.

Nachfolgend beschriebene Ausführungsbeispiele werden anhand von Figuren näher erläutert. Ein oder mehrere Merkmale dieser Beispiele können mit den oben beschriebenen Aspekten der Erfindung und deren Ausführungsformen kombiniert werden. Die beanspruchten Schutzbereiche sind nicht auf die gezeigten Beispiele beschränkt.

Es zeigen:
- Figur 1:: Schematische Längsschnittdarstellung eines Ausführungsbeispiels der Erfindung;
- Figur 2:: Schematische Darstellung eines mit einem Gefäßboden verbundenen Unterteils;
- Figur 3:: Schematische Querschnittdarstellung durch ein Oberteil und ein Unterteil im aufgesteckten Zustand.

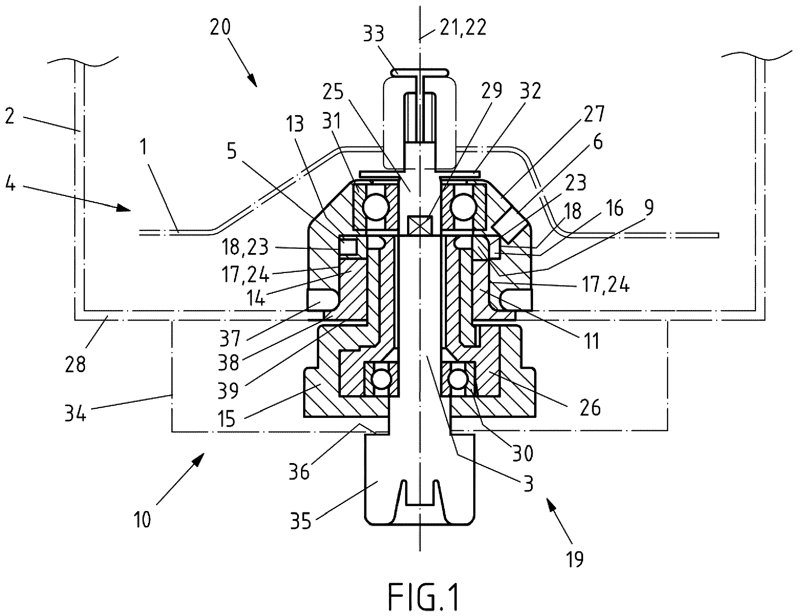

Die Figur 1 zeigt ein Werkzeug 1 zum Mischen und/oder Zerkleinern im verriegelt verbundenen Zustand mit der Welle 3. Die Welle 3 erstreckt sich durch einen Gefäßboden 28 eines mit gestrichelten Linien angedeuteten Speisenzubereitungsgefäß 2 und kann ein Drehmoment von einem nicht dargestellten Elektromotor auf das Werkzeug 1 übertragen, sodass sich das Werkzeug 1 innerhalb des Speisenzubereitungsgefäßes 2 zum Mischen und/oder Zerkleinern einer nicht dargestellten Speise um eine Drehachse 21 drehen kann. Vorzugsweise ist das Werkzeug 1 mit mindestens zwei oder vier radialen Klingen bzw. einem Messerpaket ausgestattet. Das Werkzeug 1 ist mittels einer Werkzeugfixierung 33 am oberen Ende einer Ankopplungswelle 25 angebracht, insbesondere mittels einer Schraubverbindung und einer Nietverbindung zum Fixieren der Schraubverbindung. Ein beidseitig zuverlässiger Drehbetrieb wird so ermöglicht.

Die Ankopplungswelle 25 ist über ein oberes Kugellager 31 drehbar und axial fixiert in einem Oberteilgehäuse 27 gelagert. Um das Innere des Oberteilgehäuses 27 und die Lagerung gegen Verschmutzung zu schützen, ist unmittelbar darüber eine Abschirmung 32 an der Ankopplungswelle 25 vorgesehen, insbesondere in Form eines radialen Kranzes. Am unteren Ende der Ankopplungswelle 25 ist eine Kopplungskontur für eine Kopplungsverbindung 29 mit der Welle 3 ausgeformt. Insbesondere ist die Kopplungsverbindung 29 eine formschlüssig drehfeste Verbindung. Vorzugsweise ist die Kopplungskontur der Ankopplungswelle 25 eine Vertiefung, in die eine entsprechende Gegenkontur des oberen Endes der Welle 3 eingefügt werden kann, um die formschlüssig drehfeste Kopplungsverbindung 29 zu bilden, wie in Figur 1 gezeigt. Beispielsweise hat die Vertiefung einen viereckigen oder quadratischen Querschnitt und die Gegenkontur hat eine entsprechende Vierkant-Form. Das Oberteilgehäuse 27, die Ankopplungswelle 25 und das obere Kugellager 31 bilden im Wesentlichen eine gemeinsame Baugruppe, die als Oberteil 20 bezeichnet wird. Das Oberteilgehäuse 27 begrenzt und definiert eine innere und nach unten offene Ausnehmung 16, 17, 18, so dass das Oberteil 20 auf eine andere Baugruppe axial aufgesteckt werden kann, die als Unterteil 10 bezeichnet wird.

In einer Ausgestaltung umschließt das Oberteil 20 im aufgesteckten Zustand einen sich innerhalb des Speisenzubereitungsgefäßes 2 befindlichen Teil eines Unterteils 10. Ein ringförmiges Dichtelement 37 ist vorgesehen, um die ringförmige Unterseite des Oberteilgehäuses 27 im aufgesteckten bzw. betriebsbereiten Zustand zum Gefäßboden 28 feuchtigkeitsdicht abzudichten.

Das Unterteil 10 umfasst die Welle 3, ein Unterteilgehäuse 26 und ein in dem Unterteilgehäuse 26 fest sitzendes unteres Kugellager 30 zum drehbaren und axial fixierten Lagern der Welle 3. Das Unterteil 10 weist innerhalb des Speisenzubereitungsgefäßes 2 ein Sperrelement 9 auf, das um eine Rotationsachse 22, die parallel oder entlang der Drehachse 21 verlauft, relativ zu einem darunter angeordneten Zapfenelement 11 des Unterteils 10 gedreht werden kann. Das Zapfenelement 11 erstreckt sich teilweise durch eine Gefäßdurchführung 39, also eine Durchgangsöffnung, im Gefäßboden 28. Eine nicht rotationssymmetrische Verankerungskontur 38 dieses sich innerhalb der Gefäßdurchführung befindlichen Teils des Zapfenelements 11 sorgt durch ein Eingreifen in eine entsprechend geformte Durchführungskontur, also eine Kontur einer Durchführung, für eine formschlüssig drehfeste Verbindung. Insbesondere sind die Verankerungskontur 38 und die Durchführungskontur sternartig. Ein Rückstellelement 15, welches insbesondere das Unterteilgehäuse 26 umgreift, erstreckt sich von außen und unterhalb des Speisenzubereitungsgefäßes 2 durch die Gefäßdurchführung 39 bis zum Sperrelement 9. Bei einer Rotation des Rückstellelements 15 um die Rotationsachse 22 kann das Sperrelement 9 mitgenommen werden, so dass über das Rückstellelement 15 das Sperrelement 9 um die Rotationsachse 22 rotieren kann. Insbesondere erstreckt sich auch das Unterteilgehäuse 26 durch die Gefäßdurchführung 39. Gleichsam erstrecken sich das Unterteilgehäuse 26 und das Rückstellelement 15 gemeinsam mit der Welle 3 in Richtung der Rotationsachse 22 durch eine entsprechende Öffnung in dem Zapfenelement 11 und dem Sperrelement 9. Vorzugsweise erstrecken sich das Unterteilgehäuse 26 und/oder das Rückstellelement 15 bis zu einer Oberseite des Sperrelements 9. Die Ausnehmung 16, 17, 18 des Oberteils 20 ist so tief, dass im aufgesteckten Zustand im oberen Bereich des Oberteils 20 nur die Welle 3 axial in Kontakt mit der Anschlusswelle 25 steht, nicht jedoch die Oberseite des Sperrelements 9, des Unterteilgehäuses 26 oder des Rückstellelements 15, um eine Überbestimmung zu vermeiden. Axiale Fertigungstoleranzen des Oberteilgehäuses 27 werden ferner durch die Elastizität des Dichtelements 37 zum Gefäßboden 28 ausgeglichen. Die Unterseite des Unterteils 10 bildet eine Kupplungseinrichtung 35 der Welle 3, die unterhalb des Unterteilgehäuses 26 radial mit einer nicht rotationssymmetrischen Umfangkontur, bevorzugt eine sternförmige Kontur, aufgeweitet ist.

Das Unterteil 10 und das Oberteil 20 bilden zusammen eine Werkzeuganordnung 19. Die Werkzeuganordnung 19 kann mit einem Speisenzubereitungsgefäß 2 fest, aber dennoch lösbar, verbunden werden und somit eine gemeinsame Einheit bilden. Beispielsweise kann ein durch gestrichelte Linien angedeutetes Spannelement 34 vorgesehen werden, um das Unterteil 10 mit der Unterseite des Gefäßbodens 28 zu verbinden und/oder derart zu verspannen, dass im verriegelt verbundenen Zustand das Oberteil 20 und das Unterteil 10 das Dichtelement 37 auf der Oberseite des Gefäßbodens 28 auf den Gefäßboden presst. Das Spannelement 34 steht insbesondere im Eingriff mit dem Unterteilgehäuse 26 und/oder dem Zapfenelement 11. Bevorzugt greift das Spannelement 34 vorzugsweise keilartig zwischen die Unterseite eines radial hervorstehenden Bereichs der Verankerungskontur 38 und die Oberseite eines nicht dargestellten radialen Rastauslegers des Unterteilgehäuses 26, der bevorzugt axial deckungsgleich mit dem radial hervorstehenden Bereichs der Verankerungskontur 38 ist. Der Absatz 36 ist von dem Spannelement 34 beabstandet, so dass ein Drehen der Welle 3 ungehindert möglich ist. Der Gefäßboden 28 kann somit zwischen dem Oberteil 20 und dem Unterteil 10 eingeklemmt und eine axiale Fixierung erhalten werden. Die Verankerungskontur 38 sorgt im Zusammenspiel mit der Gefäßdurchführung 39 des Gefäßbodens 28 für eine drehfeste Fixierung.

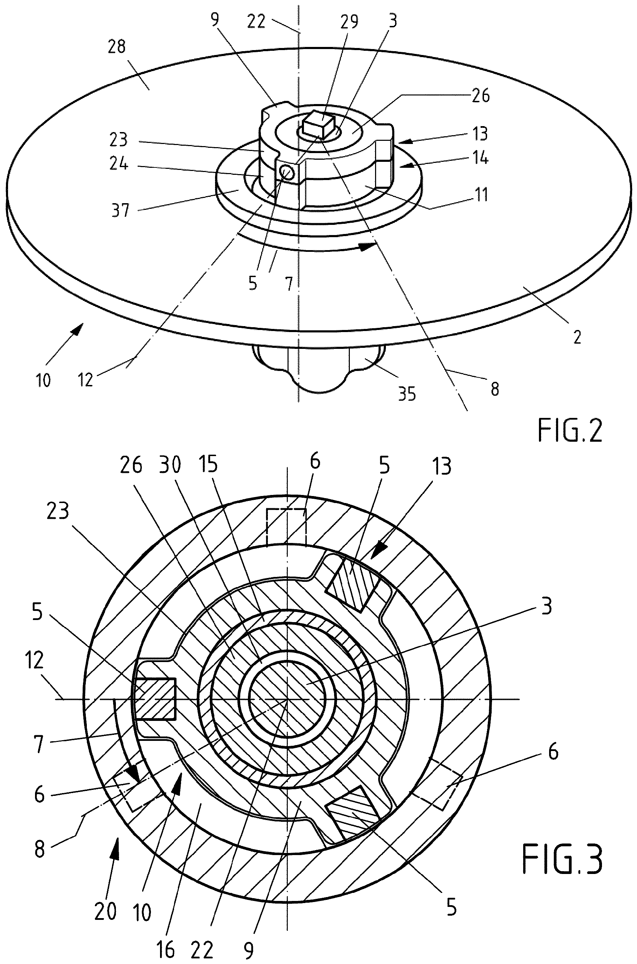

Das Unterteil 10 und das Oberteil 20 bilden eine Anordnung wobei ein bajonettartiger Verriegelungsmechanismus 4 zum Verriegeln des Oberteils 20 mit dem Unterteil 10 vorgesehen ist. Der Verriegelungsmechanismus 4 sieht vor, dass nur in einer Decklage 12 des rotierbaren Sperrelements 9, in der die Zapfenelement-Außenkontur 24 wie in Figur 1 gezeigt die Sperrelement-Außenkontur 23 axial überdeckt, das Oberteil 20 drehfest auf das Unterteil 10 aufgesteckt werden kann. Die Ausnehmung des Oberteilgehäuses 27 weist dazu eine Eingangskontur 17 entlang des Randes der offenen Unterseite auf, die eine Gegenkontur zur Zapfenelement-Außenkontur 24 für ein Erzeugen einer formschlüssig drehfesten Verbindung hat. Das Sperrelement 9 kann die Eingangskontur 17 beim Aufstecken des Oberteils 20 gemeinsam mit dem Zapfenelement 11 also nur passieren, wenn die Sperrelement-Außenkontur 23 und die Zapfenelement-Außenkontur 24 so übereinander angeordnet sind, dass sie beide axial durch die Eingangskontur 17 geschoben werden können. Das Sperrelement 9 kann so von dem Oberteil 20 umschlossen werden und eine an die Eingangskontur 17 axial angrenzende Innenkontur 18 der Ausnehmung erreichen. Die Innenkontur 18 formt eine verglichen mit der Eingangskontur 17 axial hinterschnittene Aussparung 16 aus. Das Sperrelement 9 wird so bei Erreichen der Innenkontur 18 nicht mehr formschlüssig drehfest fixiert, sondern kann durch die hinterschnittene Aussparung 16 um die Rotationsachse 22 rotieren bzw. rotiert werden. Ein radialer Sperrelement-Vorsprung 13 des Sperrelements 9, der in der Decklage 12 insbesondere bündig auf einem Zapfenelement-Vorsprung 14 die Eingangskontur 17 bis zur Innenkontur 18 passieren konnte, kann nun in die hinterschnittene Aussparung 16 des Oberteils 20 gelangen und damit das Oberteil 20 mit dem Unterteil 10 verriegelt verbinden. Diese Rotationsausrichtung des Sperrelements wird als Sperrlage 8 bezeichnet, die in den Figuren 2 und 3 gezeigt wird.

Wie die Figuren 1 bis 3 zeigen, weist das Sperrelement 9 einen Magneten 5 auf und zwar an dem Sperrelement-Vorsprung 13, bevorzugt in den Sperrelement-Vorsprung 13 eingelassen. Gleichzeitig weist auch das Oberteilgehäuse 27 einen Magneten 6 auf, wie die Figuren 1 und 3 zeigen. Der Magnet 6 des Oberteils 20 ist an der hinterschnittenen Aussparung und damit in der Sperrlage 8 angeordnet und dort ebenfalls bevorzugt in das Oberteilgehäuse 27 eingelassen. Insbesondere ist der Magnet 6 axial oberhalb des Sperrelements 9 und/oder schräg zur Rotationsachse 22 ausgerichtet, um zur Vermeidung von Magnetfeldstörungen einen möglichst großen Abstand zum Zapfenelement 11 zu erhalten. Beide Magnete 5 und 6 können sich durch Magnetkraft gegenseitig anziehen. Wenn das Oberteil 20 auf das Unterteil 10 aufgesteckt ist und das sich in der Decklage 12 befindliche Sperrelement 9 die Eingangskontur 17 verlässt und die Innenkontur 18 erreicht hat, zieht der Magnet 6 des Oberteils 20 an der hinterschnittenen Aussparung 16 den Magnet 5 des sich in der Decklage 12 befindlichen Sperrelement-Vorsprungs 13 zu sich in die hinterschnittene Aussprung 16 und damit in die Sperrlage 8. Diese Rotationsbewegung 7, die in den Figuren 2 und 3 gezeigt ist, erfolgt also selbstständig ohne ein Einwirken eines Benutzers, eines Motors oder einer elektronischen Einrichtung. Es wird also selbstständig verriegelt.

Die Figur 2 zeigt das Unterteil 10, das von unten in die Gefäßdurchführung 39 des Gefäßbodens 28 eingesetzt ist. Der Rest des Speisenzubereitungsgefäßes 2 ist ausgeblendet. Einer Kopplungsverbindung 29 mit der ausgeblendeten Ankopplungswelle 25 kann durch die gezeigte Vierkant-Kontur am oberen Ende der Welle 3 ermöglicht werden. Das Sperrelement 9 befindet sich in der Decklage 12 zum Zapfenelement 11. Das Sperrelement 9 und das Zapfenelement 11 haben deckungsgleiche Außenkonturen 22, 23. Es sind mindestens zwei und/oder höchstens zwölf, bevorzugt genau drei, umfänglich gleichmäßig verteilte Sperrelement-Vorsprünge 13 und/oder Zapfenelement-Vorsprünge 14 vorgesehen, die an einer sonst insbesondere zylindrisch geformten Umfangfläche radial hervorstehen. Durch eine Rotationsbewegung 7 entgegen dem Uhrzeigersinn kann das Sperrelement 9 von der Decklage 12 in die Sperrlage 8 gelangen.

In einer alternativen Gestaltung wie in Figur 2 gezeigt könnte grundsätzlich die Ankopplungswelle 25 durch die Gefäßdurchführung im Gefäßboden 28 verlaufen. Dies würde jedoch beim Lösen des Werkzeugs 1 von der Welle 3 dazu führen, dass die Ankopplungswelle 25 aus der Gefäßdurchführung entfernt würde und somit ein flüssiger Speiseanteil durch die Gefäßdurchführung 39 nach unten austreten oder zumindest ins Innere des Unterteilgehäuses 26 gelangen könnte. Daher ist diese alternative Ausgestaltung nicht bevorzugt.

Die schematische Querschnittdarstellung in Figur 3 durch den Bereich der Innenkontur der Ausnehmung im aufgesteckten Zustand des Oberteils 20 auf das Unterteil 10 illustriert schematisch die Lage und Ausrichtung der Magnete 6 des Oberteils 20, die zur Veranschaulichung in die Ebene der Magneten 5 des Sperrelements 9 projiziert und daher gestrichelt dargestellt sind. Für das selbstständige Verriegeln ziehen sich die Magnete 5 und 6 so an, dass das Sperrelement 9 von der Decklage 12 die Rotationsbewegung 7 entgegengesetzt zum Uhrzeigersinn in die Sperrlage 8 um die Rotationsachse 22 ausführt.

Es genügt somit für den Zusammenbau des Oberteils 20 und des Unterteils 10 das Aufstecken des Oberteils 20 auf das Unterteil 10 durch den Benutzer. Zum Lösen des Oberteils 20 vom Unterteil 10 betätigt der Benutzer das Rückstellelement 15 an der Unterseite, um das Sperrelement 9 in die Decklage 12 mit dem Zapfenelement 11 zu rotieren, so dass das Oberteil axial von dem Unterteil abgezogen werden kann.

Die Anordnung kann ein Bajonettverschluss sein. Allgemein besteht ein Bajonettverschluss im Wesentlichen aus zwei Baugruppen wie z.B. vorliegend das Oberteil 20 und das Unterteil 10. Insbesondere umfasst das Unterteil 10 ein starres Zapfenelement 11 mit einer nicht rotationssymmetrischen Zapfenelement-Außenkontur 24. Außenkontur meint hier Umfangkontur in einem Querschnitt zur Drehachse 21 bzw. Rotationsachse 22. Auf dem Zapfenelement 11 drehbar gelagert befindet sich ein Sperrelement 9 mit gleicher umfänglicher Außenkontur und gleichem Querschnitt. Insbesondere weisen das Zapfenelement 11 und das Sperrelement 9 einen gleichbleibenden Querschnitt in Richtung der Drehachse 21 bzw. Rotationsachse 22 auf. An der Sperrelement-Außenkontur 23 befindet sich mindestens ein Magnet 5, bevorzugt drei Magnete 5. Vorzugsweise ist der Magnet 5 in den radialen Sperrelement-Vorsprung 13 eingelassen oder bildet den Sperrelement-Vorsprung 13. Das Sperrelement 9 kann zwei verschiedene Positionen auf dem Zapfenelement 11 einnehmen, die Decklage 12 und die Sperrlage 8. In der Decklage 12 sind die nicht rotationssymmetrische, insbesondere sternartige, Zapfenelement-Außenkontur 24 und die Sperrelement- Außenkontur 23 deckungsgleich, und in der Sperrlage sind sie gegeneinander verdreht. Die zweite Baugruppe bzw. das Oberteil 20 hat eine Ausnehmung 16, 17, 18 mit radialen Aussparungen einer Eingangskontur 17, die komplementär zur Sperrelement-Außenkontur 23 und zur Zapfenelement-Außenkontur 24 des Unterteils 10 ist. Ebenfalls weist das Oberteil 20 mindestens einen Magneten 6, bevorzugt drei Magnete 6 auf. Befinden sich das Zapfenelement 11 und das Sperrelement 9 des Unterteils 10 in Decklage 12, dann lässt sich das Oberteil 10 auf das Unterteil 20 aufsetzten.

Wird das Sperrelement 9 bei aufgesetztem Oberteil 20 verdreht, greift dieses in eine hinterschnittene Aussparung 16 in oder auf dem Oberteil 20, so dass eine Trennung von Oberteil 20 und Unterteil 10 somit verhindert wird. Das Zapfenelement 11 verhindert dabei eine relative Verdrehung des Oberteils 20. Die Verdrehung des Sperrelements 9 geschieht durch die Anziehungskräfte zwischen den Magneten 5, 6 des Oberteils 20 und des Unterteils 10. Wenn in Richtung der Rotationsachse 22 betrachtet die Magnete 5, 6 des Oberteils 20 und Unterteils 10 insbesondere zentriert auf einer gemeinsamen Radialen zur Rotationsachse 22 liegen, so befindet sich das Sperrelement 9 in der Sperrlage 8. Die Magneten 5, 6 haben sich dann einander maximal angenähert, zueinander ausgerichtet und/oder liegen einander gegenüber bzw. voreinander. Über ein Rückstellelement 15 ist das Sperrelement 9 von außen durch den Anwender erreichbar, sodass das Sperrelement 9 entgegen der Magnetkraft zurückgedreht und so das Sperrelement 9 wieder in Decklage 12 gebracht werden kann. Das Oberteil 20 kann dann wieder von dem Unterteil 10 nach oben entnommen werden. Es kann so ermöglicht werden, dass zwei zu verbindende Baugruppen wie ein Oberteil 20 und ein Unterteil 10 über einen Bajonettverschluss formschlüssig fixiert werden können, ohne dass diese durch den Anwender oder einen Motor manuell zueinander verdreht zu werden brauchen. Stattdessen erfolgt das Verrasten der zu verbindenden Baugruppen selbstständig bzw. automatisch.

Insbesondere zeigen die Figuren 2 und/oder 3 ergänzende Darstellungen des Ausführungsbeispiels der Figur 1.

## Patentansprüche

1. Speisenzubereitungsvorrichtung mit einem drehbaren Werkzeug (1) zum Zerkleinern und/oder Mischen einer Speise in einem Speisenzubereitungsgefäß (2), wobei das Werkzeug (1) zum Drehen lösbar mit einer Welle (3) verbunden werden kann, die zumindest teilweise außerhalb des Speisenzubereitungsgefäßes (2) liegt, wobei ein Verriegelungsmechanismus (4) für ein verriegeltes Verbinden des Werkzeugs (1) mit der Welle (3) vorgesehen ist, wobei das Verriegeln selbstständig erfolgen kann, **dadurch gekennzeichnet, dass** ein Magnet (5, 6) vorgesehen und der Verriegelungsmechanismus (4) so eingerichtet ist, dass das selbstständige Verriegeln durch eine Magnetkraft des Magneten (5, 6) erfolgt.

2. Speisenzubereitungsvorrichtung nach dem vorhergehenden Anspruch, **dadurch gekennzeichnet, dass** ein Oberteil (20), an dem das Werkzeug (1) angebracht ist, und ein Unterteil (10), das die Welle (3) umfasst, vorgesehen sind und der Verriegelungsmechanismus (4) so eingerichtet ist, dass das selbstständige Verriegeln für das verriegelte Verbinden des Werkzeugs (1) mit der Welle (3) zwischen dem Oberteil (20) und dem Unterteil (10) erfolgt.

3. Speisenzubereitungsvorrichtung nach einem der vorhergehenden Ansprüche, **dadurch gekennzeichnet, dass** das Unterteil (10) mindestens einen Magneten (5) und/oder das Oberteil (20) mindestens einen Magneten (6) umfasst.

4. Speisenzubereitungsvorrichtung nach einem der vorhergehenden Ansprüche, **dadurch gekennzeichnet, dass** eine Ankopplungswelle (25) vorgesehen ist, an der das Werkzeug (1) angebracht ist, und der Verriegelungsmechanismus (4) so eingerichtet ist, dass die Ankopplungswelle (25) axial an die Welle (3) angekoppelt wird, wenn das Werkzeug (1) mit der Welle (3) verriegelt verbunden wird.

5. Speisenzubereitungsvorrichtung nach einem der vorhergehenden Ansprüche, **dadurch gekennzeichnet, dass** der Verriegelungsmechanismus (4) so eingerichtet ist, dass das selbstständige Verriegeln durch eine selbstständige Rotationsbewegung (7) in eine Sperrlage (8) erfolgt.

6. Speisenzubereitungsvorrichtung nach dem vorhergehenden Anspruch, **dadurch gekennzeichnet, dass** ein Sperrelement (9) vorgesehen und der Verriegelungsmechanismus (4) so eingerichtet ist, dass das Sperrelement (9) in eine hinterschnittene Aussparung (16) gelangt ist, wenn das Sperrelement (9) durch die selbstständige Rotationsbewegung (7) die Sperrlage (8) erreicht, so dass das Werkzeug (1) mit der Welle (3) verriegelt verbunden ist.

7. Speisenzubereitungsvorrichtung nach dem vorhergehenden Anspruch sowie Anspruch 3, **dadurch gekennzeichnet, dass** das Unterteil (10) das Sperrelement (9) und/oder das Oberteil (20) die hinterschnittene Aussparung (16) umfasst.

8. Speisenzubereitungsvorrichtung nach einem der zwei vorhergehenden Ansprüche, **dadurch gekennzeichnet, dass** das Sperrelement (9) relativ zu einem axial angrenzenden Zapfenelement (11) rotieren kann und der Verriegelungsmechanismus (4) so eingerichtet ist, dass in einer Decklage (12) des Sperrelements (9) das Zapfenelement (11) das Sperrelement (9) axial überdeckt.

9. Speisenzubereitungsvorrichtung nach dem vorhergehenden Anspruch sowie Anspruch 3, **dadurch gekennzeichnet, dass** das Unterteil (10) das Zapfenelement (11) umfasst und/oder das Sperrelement (9) axial zwischen dem Zapfenelement (11) und dem Oberteil (20) angeordnet ist.

10. Speisenzubereitungsvorrichtung nach einem der zwei vorhergehenden Ansprüche sowie Anspruch 3, **dadurch gekennzeichnet, dass** das Oberteil (20) eine Ausnehmung (16, 17, 18) zum Aufnehmen des Zapfenelements (11) und des Sperrelements (9) umfasst, wobei die Ausnehmung (16, 17, 18) eine Eingangskontur (17) zum drehfesten Aufnehmen des Zapfenelements (11) und/oder eine Innenkontur (18) zum Erlauben der selbstständigen Rotationsbewegung (7) von der Decklage (12) in die Sperrlage (8) aufweist.

11. Speisenzubereitungsvorrichtung nach einem der drei vorhergehenden Ansprüche, **dadurch gekennzeichnet, dass** das Zapfenelement (11) in der Decklage (12) des Sperrelements (9) mit einem radialen Zapfenelement-Vorsprung (14) einen radialen Sperrelement-Vorsprung (13) des Sperrelements (9) axial überdeckt.

12. Speisenzubereitungsvorrichtung nach dem vorhergehenden Anspruch sowie Anspruch 11, **dadurch gekennzeichnet, dass** die Eingangskontur (17) der Ausnehmung (16, 17, 18) des Oberteils (20) für ein axiales Führen des Zapfenelement-Vorsprungs (14) angepasst ist, derart, dass das Zapfenelement (11) drehfest in dem Oberteil (20) aufgenommen werden kann.

13. Speisenzubereitungsvorrichtung nach einem der vorhergehenden Ansprüche, **dadurch gekennzeichnet, dass** ein Rückstellelement (15) zum Lösen der verriegelten Verbindung des Werkzeugs (1) mit der Welle (3) vorgesehen ist.

14. Anordnung für eine Speisenzubereitungsvorrichtung nach einem der vorhergehenden Ansprüche mit einem Oberteil (20) und einem Unterteil (10), wobei ein bajonettartiger Verriegelungsmechanismus (4) zum Verriegeln des Oberteils (20) mit dem Unterteil (10) vorgesehen und so beschaffen ist, dass nur in einer Decklage (12) eines Sperrelements (9) des Unterteils (10) das Oberteil (20) drehfest auf das Unterteil (10) aufgesteckt werden kann, so dass das Sperrelement (9) von dem Oberteil (20) umschlossen wird und von der Decklage (12) in eine Sperrlage (8) bewegt werden kann, in der ein Sperrelement-Vorsprung (13) des Sperrelements (9) in eine hinterschnittene Aussparung (16) des Oberteils (20) gelangt, so dass das Oberteil (20) mit dem Unterteil (10) verriegelt verbunden wird, wobei das Bewegen des Sperrelements (9) von der Decklage (12) in die Sperrlage (8) selbstständig erfolgen kann, **dadurch gekennzeichnet, dass** ein Magnet (5, 6) vorgesehen und der Verriegelungsmechanismus (4) so eingerichtet ist, dass das selbstständige Verriegeln durch eine Magnetkraft des Magneten (5, 6) erfolgt.

## Claims

1. Food preparation device comprising a rotatable tool (1) for chopping and/or mixing a food in a food preparation vessel (2), wherein the tool (1) can be detachably connected to a shaft (3) for rotation which is located at least partly outside the food preparation vessel (2), wherein a locking mechanism (4) is provided for interlockingly connecting the tool (1) to the shaft (3), wherein the locking can be carried out automatically, **characterized in that** a magnet (5, 6) is provided and the locking mechanism (4) is configured such that the automatic locking is carried out by a magnetic force of the magnet (5, 6).

2. Food preparation device according to the preceding claim, **characterized in that** an upper part (20) to which the tool (1) is attached and a lower part (10) comprising the shaft (3) are provided and the locking mechanism (4) is configured such that the automatic locking for the interlocking connection of the tool (1) to the shaft (3) is carried out between the upper part (20) and the lower part (10).

3. Food preparation device according to one of the preceding claims, **characterized in that** the lower part (10) comprises at least one magnet (5) and/or the upper part (20) comprises at least one magnet (6).

4. Food preparation device according to one of the preceding claims, **characterized in that** a coupling shaft (25) is provided to which the tool (1) is attached, and the locking mechanism (4) is configured such that the coupling shaft (25) is axially coupled to the shaft (3) when the tool (1) is interlockingly connected to the shaft (3).

5. Food preparation device according to one of the preceding claims, **characterized in that** the locking mechanism (4) is configured such that the automatic locking is carried out by an automatic rotational movement (7) into a blocking position (8).

6. Food preparation device according to the preceding claim, **characterized in that** a blocking element (9) is provided and the locking mechanism (4) is configured such that the blocking element (9) has entered an undercut recess (16) when the blocking element (9) reaches the blocking position (8) by the automatic rotational movement (7), so that the tool (1) is interlockingly connected to the shaft (3).

7. Food preparation device according to the preceding claim and claim 3, **characterized in that** the lower part (10) comprises the locking element (9) and/or the upper part (20) comprises the undercut recess (16).

8. Food preparation device according to one of the two preceding claims, **characterized in that** the locking element (9) can rotate relative to an axially adjacent post member (11) and the locking mechanism (4) is configured such that in a cover position (12) of the locking element (9) the post member (11) axially covers the locking element (9).

9. Food preparation device according to the preceding claim and claim 3, **characterized in that** the lower part (10) comprises the post member (11) and/or the locking element (9) is arranged axially between the post member (11) and the upper part (20).

10. Food preparation device according to one of the two preceding claims and claim 3, **characterized in that** the upper part (20) comprises a recess (16, 17, 18) for receiving the post member (11) and the blocking element (9), the recess (16, 17, 18) having an entry contour (17) for receiving the post member (11) in a rotationally fixed manner and/or an inner contour (18) for allowing the automatic rotational movement (7) from the cover position (12) into the blocking position (8).

11. Food preparation device according to one of the three preceding claims, **characterized in that** in the cover position (12) of the locking element (9) the post member (11) axially covers with a radial post member projection (14) a radial locking element projection (13) of the locking element (9).

12. Food preparation device according to the preceding claim and claim 11, **characterized in that** the entry contour (17) of the recess (16, 17, 18) of the upper part (20) is adapted for an axial guiding of the post member projection (14), such that the post member (11) can be received in the upper part (20) in a rotationally fixed manner.

13. Food preparation device according to one of the preceding claims, **characterized in that** a return element (15) is provided for releasing the interlocking connection of the tool (1) to the shaft (3).

14. Assembly for a food preparation device according to one of the preceding claims with an upper part (20) and a lower part (10), wherein a bayonet-like locking mechanism (4) is provided for locking the upper part (20) to the lower part (10) and is arranged such that the upper part (20) can be plugged in a rotationally fixed manner onto the lower part (10) only in a cover position (12) of a locking element (9) of the lower part (10), so that the locking element (9) is enclosed by the upper part (20) and can be moved from the cover position (12) into a blocking position (8) in which a locking element projection (13) of the locking element (9) enters an undercut recess (16) of the upper part (20), so that the upper part (20) is interlockingly connected to the lower part (10), wherein the movement of the locking element (9) from the cover position (12) into the blocking position (8) can be carried out automatically, **characterized in that** a magnet (5, 6) is provided and the locking mechanism (4) is configured such that the automatic locking is carried out by a magnetic force of the magnet (5, 6).

## Revendications

1. Dispositif de préparation d'aliments comprenant un outil rotatif (1) pour broyer et/ou mélanger un aliment dans un récipient de préparation d'aliments (2), dans lequel l'outil (1) peut être relié de manière amovible à un arbre (3) pour tourner, lequel arbre se trouve au moins partiellement à l'extérieur du récipient de préparation d'aliments (2), dans lequel un mécanisme de verrouillage (4) est prévu pour une liaison verrouillée entre l'outil (1) et l'arbre (3), le verrouillage pouvant se faire de manière autonome, **caractérisé en ce qu'**un aimant (5, 6) est prévu et le mécanisme de verrouillage est configuré de sorte que le verrouillage autonome est réalisé par moyen d'une force magnétique de l'aimant(5, 6).

2. Dispositif de préparation d'aliments selon la revendication précédente, **caractérisé en ce qu'**une partie supérieure, sur laquelle est monté l'outil (1), et une partie inférieure (10), qui comprend l'arbre (3), sont prévues et le mécanisme de verrouillage (4) est configuré de sorte que le verrouillage autonome pour relier l'outil (1) à l'arbre (3) s'effectue entre la partie supérieure (20) et la partie inférieure (10).

3. Dispositif de préparation d'aliments selon l'une des revendications précédentes, **caractérisé en ce que** la partie inférieure (10) comprend au moins un aimant (5) et/ou la partie supérieure (20) comprend au moins un aimant (6).

4. Dispositif de préparation d'aliments selon l'une des revendications précédentes, **caractérisé en ce qu'**un arbre d'accouplement (25) est prévu, sur lequel est monté l'outil (1), et que le mécanisme de verrouillage (4) est configuré de sorte que l'arbre d'accouplement (25) est couplé axialement à l'arbre (3), quand l'outil (1) est relié de manière verrouillée à l'arbre (3).

5. Dispositif de préparation d'aliments selon l'une des revendications précédentes, **caractérisé en ce que** le mécanisme de verrouillage (4) est configuré de sorte que le verrouillage autonome s'effectue par un mouvement rotatif autonome (7) dans une position de blocage (8).

6. Dispositif de préparation d'aliments selon la revendication précédente, **caractérisé en ce qu'**un élément de blocage (9) est prévu et le mécanisme de verrouillage est configuré de sorte que l'élément de blocage (9) arrive dans un évidement contre-dépouillé (16), quand l'élément de blocage (9) se met dans la position de blocage (8) par le mouvement rotatif autonome (7), de sorte que l'outil (1) est relié de manière verrouillée à l'arbre (3).

7. Dispositif de préparation d'aliments selon la revendication précédente et la revendication 3, **caractérisé en ce que** la partie inférieure (10) comprend l'élément de blocage (9) et/ou la partie supérieure (20) comprend l'évidement contre-dépouillé (16).

8. Dispositif de préparation d'aliments selon l'une des deux revendications précédentes, **caractérisé en ce que** l'élément de blocage (9) peut tourner par rapport à un élément de tenon (11) axialement adjacent et que le mécanisme de verrouillage (4) est configuré de sorte que dans une position de couvrement (12) de l'élément de blocage (9) l'élément de tenon (11) couvre l'élément de blocage (9) axialement.

9. Dispositif de préparation d'aliments selon la revendication précédente et la revendication 3, **caractérisé en ce que** la partie inférieure (10) comprend l'élément de tenon (11) et/ou l'élément de blocage (9) est disposé axialement entre l'élément de tenon (11) et la partie supérieure (20).

10. Dispositif de préparation d'aliments selon l'une des deux revendications précédentes ainsi que la revendication 3, **caractérisé en ce que** la partie supérieure (20) comprend un évidement (16, 17, 18) pour recevoir l'élément de tenon (11) et l'élément de blocage (9), l'évidement (16, 17, 18) comprenant un contour d'entrée (17) pour recevoir de façon solidaire en rotation l'élément de tenon (11) et/ou un contour intérieur (18) pour permettre le mouvement rotatif autonome (7) de la position de couvrement (12) dans la position de blocage (8).

11. Dispositif de préparation d'aliments selon l'une des trois revendications précédentes, **caractérisé en ce que** dans la position de couvrement (12) de l'élément de blocage (9) l'élément de tenon (11) couvre par moyen d'une saillie radiale d'élément de tenon (14) axialement une saillie radiale d'élément de blocage (13) de l'élément de blocage (9).

12. Dispositif de préparation d'aliments selon la revendication précédente et la revendication 11, **caractérisé en ce que** le contour d'entrée (17) de l'évidement (16, 17, 18) de la partie supérieure (20) est adapté pour un guidage axial de la saillie d'élément de tenon (14), de sorte que l'élément de tenon (11) peut être reçu de manière solidaire en rotation dans la partie supérieure (20).

13. Dispositif de préparation d'aliments selon l'une des revendications précédentes, **caractérisé en ce qu'**un élément de rappel (15) pour desserrer la liaison verrouillée entre l'outil (1) et l'arbre (3) est prévu.

14. Ensemble pour un dispositif de préparation d'aliments selon l'une des revendications précédentes, comprenant une partie supérieure (20) et une partie inférieure (10), un mécanisme de verrouillage (4) en forme d'une baïonnette pour verrouiller la partie supérieure (20) avec la partie inférieure (10) étant prévu et configuré, de sorte que seulement dans une position de couvrement (12) d'un élément de blocage (9) de la partie inférieure (10) la partie supérieure (20) peut être accrochée sur la partie inférieure (10), de sorte que l'élément de blocage (9) est entouré par la partie supérieure (20) et il peut être déplacé de la position de couvrement (11) dans une position de blocage (8), dans laquelle une saillie d'élément de blocage (13) de l'élément de blocage (9) se met dans un évidement contre-dépouillé (16) de la partie supérieure (20), de sorte que la partie supérieure (20) est reliée de manière verrouillée à la partie inférieure (10), le déplacement de l'élément de blocage (9) de la position de couvrement (12) dans la position de blocage (8) pouvant se faire de manière autonome, **caractérisé en ce qu'**un aimant (5,6) est prévu et que le mécanisme de verrouillage (4) est configuré de sorte que le verrouillage autonome s'effectue à l'aide d'une force magnétique de l'aimant (5, 6).
